# EUROPÄISCHE PATENTSCHRIFT

(11) **EP 2 423 152 B1**
(45) Veröffentlichungstag und Bekanntmachung des Hinweises auf die Patenterteilung: **26.12.2012**
(21) Anmeldenummer: 11006600.8
(22) Anmeldetag: 11.08.2011
(51) Int. Cl.: B66F 9/065, B66F 9/075

(54) **Flurförderzeug mit einem Batterieaufnahmeraum**
Industrial truck with a battery holder compartment
Chariot de manutention doté d'un espace de réception de batterie

(30) Priorität: 26.08.2010 DE 102010035553
(43) Veröffentlichungstag der Anmeldung: 29.02.2012
(73) Patentinhaber: Jungheinrich Aktiengesellschaft, 22047 Hamburg (DE)
(72) Erfinder: Sellentin, Jörn, 24568 Kaltenkirchen (DE); Magens, Ernst-Peter, 22949 Ammersbek (DE)
(74) Vertreter: Hauck Patent- und Rechtsanwälte

(56) Entgegenhaltungen:
- DE-A1-102007 034 743
- DE-A1-102008 060 709
- GB-A- 1 100 479
- JP-U- 51 153 976

## Beschreibung

Die Erfindung betrifft ein Flurförderzeug mit einem Antriebsteil, das einen elektrischen Fahrantrieb aufweist, einem Lastteil, das ein Lasttragmittel aufweist und gegenüber dem Antriebsteil anhebbar ist, einem Batterieaufnahmeraum und einem manuell handhabbaren, in den Batterieaufnahmeraum einsetzbaren Energiemodul, das eine Batterie zur Versorgung des Fahrantriebs aufweist, wobei das Energiemodul im in den Batterieaufnahmeraum eingesetzten Zustand eine definierte Einbaulage aufweist.

Elektrisch angetriebene Flurförderzeuge sind mit Batterien ausgestattet, deren Kapazität so bemessen ist, dass das Flurförderzeug mit einer voll aufgeladenen Batterie für eine bestimmte Zeit unabhängig von einer Stromversorgung betrieben werden kann, beispielsweise für die Dauer einer Schicht eines im Schichtbetrieb eingesetzten Flurförderzeugs. Anschließend sind die Batterien mehr oder weniger vollständig entladen, sodass ein Aufladen erforderlich ist. Soll das Flurförderzeug schnell wieder einsatzbereit sein, kann die entladene Batterie gegen eine voll aufgeladene Batterie ausgetauscht werden. Um dies zu vereinfachen, ist es bekannt, die Batterie in einen Batterieaufnahmeraum einzusetzen. Batterien herkömmlicher Bauart (Bleiakkumulatoren) sind dabei häufig bei der geforderten Kapazität so schwer, dass für das Auswechseln ein Hebezeug erforderlich ist. Batterien kleinerer Kapazität oder neuerer Technologie, insbesondere Lithium-Ionen-Akkumulatoren, können hingegen manuell gehandhabt werden.

Aus der Druckschrift DE 10 2007 034 743 A1 ist ein Niederhubwagen mit einem Batteriefach zur Aufnahme einer Batterie bekannt. Der Batterieaufnahmeraum umschließt die Batterie teilweise seitlich und unten und weist eine der Batterie zugewandte Wand mit schlitzförmigen Ausnehmungen auf. An der Rückseite der Batterie angeordnete Führungszapfen greifen in diese Ausnehmungen ein, wenn die Batterie von oben in den Batterieaufnahmeraum eingesetzt wird. Zum Entnehmen der Batterie wird diese nach oben aus dem Batterieaufnahmeraum herausgezogen.

Ebenfalls bekannt ist es, eine Batterie von der Seite in einen Batterieaufnahmeraum eines Flurförderzeugs einzuschieben. Die Druckschrift DE 199 56 623 A1 zeigt hierzu eine Batterie mit seitlich angebrachten Rollen, die auf Schienen an den Innenseiten des Batterieaufnahmeraums abrollen.

Davon ausgehend ist es die Aufgabe der Erfindung, ein Flurförderzeug nach dem Oberbegriff des Anspruchs 1 zur Verfügung zu stellen, bei dem das die Batterie umfassende Energiemodul besonders einfach auswechselbar und gleichzeitig sicher in dem Batterieaufnahmeraum gehalten ist.

Diese Aufgabe wird gelöst durch das Flurförderzeug mit den Merkmalen des Anspruchs 1. Vorteilhafte Ausgestaltungen sind in den sich anschließenden Unteransprüchen angegeben. Das Flurförderzeug hat ein Antriebsteil, das einen elektrischen Fahrantrieb aufweist, ein Lastteil, das ein Lasttragmittel aufweist und gegenüber dem Antriebsteil anhebbar ist, einen Batterieaufnahmeraum und ein manuell handhabbares, in den Batterieaufnahmeraum einsetzbares Energiemodul, das eine Batterie zur Versorgung des Fahrantriebs aufweist, wobei das Energiemodul im in den Batterieaufnahmeraum eingesetzten Zustand eine definierte Einbaulage aufweist. Der Batterieaufnahmeraum umschließt das Energiemodul im eingesetzten Zustand so, dass das Energiemodul in der definierten Einbaulage nicht verschiebbar ist, sondern erst nach einem Verkippen aus dem Batterieaufnahmeraum entnehmbar ist, wobei beim Verkippen ein oberes Ende des Energiemoduls um einen vorgegebenen Winkel um eine waagerechte Schwenkachse herum bewegt wird.

Das Flurförderzeug kann ein Niederhub-Flurförderzeug sein. Es kann sich um ein Mitgehfahrzeug handeln, insbesondere um ein deichselgeführtes Flurförderzeug. Es kann sich jedoch auch um ein Aufsitzfahrzeug oder ein Fahrzeug mit einem Benutzerstand, in dem eine Bedienperson stehend mitfahren kann, handeln. Der elektrische Fahrantrieb weist einen Elektromotor, ein Antriebsrad und gegebenenfalls ein Getriebe auf. Das Antriebsrad kann lenkbar ausgeführt sein, insbesondere mit Hilfe einer Deichsel. Es kann ein Lenkantrieb vorhanden sein.

Das Energiemodul weist eine Batterie zur Versorgung des Fahrantriebs auf. Von der Batterie können auch weitere elektrische Verbraucher des Flurförderzeugs versorgt werden, beispielsweise ein Lenkantrieb. Insbesondere können alle weiteren elektrischen Verbraucher von der Batterie versorgt werden. Das Energiemodul kann mehrere Zellen einer Batterie enthalten und ein Gehäuse aufweisen, in dem die Zellen untergebracht sind. Das Energiemodul ist manuell handhabbar, d.h., es kann ohne ein gesondertes Hebezeug von einer Bedienperson angehoben und in den Batterieaufnahmeraum eingesetzt werden. Die definierte Einbaulage, die das Energiemodul in dem Batterieaufnahmeraum einnimmt, ist durch aufeinander abgestimmte Abmessungen des Batterieaufnahmeraums und des Energiemoduls vorgegeben. Beispielsweise kann das Energiemodul im Wesentlichen quaderförmig sein und aufrecht stehend in dem Batterieaufnahmeraum gehalten sein.

Bei der Erfindung ist das Energiemodul in der definierten Einbaulage nicht verschiebbar, d.h. es kann in seiner Gesamtheit in keine Raumrichtung bewegt werden. Insbesondere ist die Lage des Energiemoduls bezüglich der vertikalen Hauptbelastungsrichtung, in der zum Beispiel Stöße und Erschütterungen beim Überfahren von Fahrbahnunebenheiten vorwiegend wirksam werden, durch den Batterieaufnahmeraum fixiert. Diese Hauptbelastungen werden vom Batterieaufnahmeraum aufgenommen, ohne dass es hierzu einer gesonderten Befestigung des Energiemoduls bedarf.

Durch die besondere Gestaltung des Batterieaufnahmeraums ist das Energiemodul in seiner Einbaulage so umschlossen, dass ein oberes Ende des Energiemoduls ausgehend von der definierten Einbaulage um eine waagerechte Schwenkachse herum verkippt werden kann. Erst nachdem diese Verkippbewegung um einen vorgegebenen Winkel ausgeführt worden ist, kann das Batteriemodul vollständig aus dem Batterieaufnahmeraum entnommen werden, beispielsweise entlang einer vorgegebenen Richtung, in der es von einem Benutzer herausgezogen werden kann.

Um das Energiemodul in den Batterieaufnahmeraum einzusetzen, muss ein umgekehrter Bewegungsablauf eingehalten werden. Das Energiemodul wird dabei in eine definierte Zwischenstellung gebracht, in der es gegenüber der definierten Einbaulage um die Schwenkachse herum um den vorgegebenen Winkel verkippt ist. Nach Erreichen dieser Zwischenposition wird das obere Ende des Energiemoduls entgegengesetzt zu der beim Entnehmen ausgeführten Verkippbewegung um die Schwenkachse herum um den vorgegebenen Winkel verkippt und gelangt dadurch in die definierte Einbaulage.

Die Schwenkachse kann sich in einem unteren Bereich des Energiemoduls befinden. Sie kann durch Führungselemente am Energiemodul, die mit Gegenstücken am Batterieaufnahmeraum zusammenwirken, vorgegeben sein. Denkbar ist auch, dass der Batterieaufnahmeraum eine schwenkbare Fläche aufweist, an die das Energiemodul angrenzt, und/oder eine schwenkbare Aufnahme, in die das Energiemodul eingesetzt wird. Bei einer besonders einfachen Lösung fällt die Schwenkachse mit einer unteren Kante des Energiemoduls zusammen, wobei die Kante in der geschilderten Zwischenposition zum Beispiel an einer Fläche des Batterieaufnahmeraums, insbesondere einem Boden des Batterieaufnahmeraums, anliegt und das Energiemodul auf dieser Kante stehend verkippt wird.

Die beim Einsetzen und Entnehmen des Energiemoduls auszuführende Bewegung kann durch den Batterieaufnahmeraum weitgehend vorgegeben sein, sodass der Bewegungsablauf sehr einfach auszuführen ist. Gleichzeitig ist das Energiemodul in seiner definierten Einbaulage besonders sicher gehalten und kann in keine Raumrichtung aus dem Batterieaufnahmeraum herausrutschen, z.B. infolge von Erschütterungen. Es wird daher ein besonders einfaches und sicheres Austauschen des Energiemoduls erreicht.

In einer Ausgestaltung weist das Energiemodul an dem oberen Ende einen Handgriff auf. An dem Handgriff kann das Energiemodul einfach ergriffen und beispielsweise zu einer Ladestation getragen werden. Die zum Entnehmen bzw. Einsetzen des Energiemoduls auszuführende Verkippbewegung kann insbesondere durch ein seitliches Bewegen des Handgriffs, insbesondere durch Heranziehen des Handgriffs an einen Benutzer, ausgeführt werden. Der Handgriff kann beispielsweise bügelförmig sein und von einer oberen Fläche des Energiemoduls nach oben vorstehen.

In einer Ausgestaltung weist das Energiemodul ein Gehäuse auf und der Handgriff ist in eine Kontur des Gehäuses integriert, sodass er nicht nach außen über das Gehäuse übersteht. Beispielsweise kann das Gehäuse eine Griffmulde aufweisen, die einen zu ergreifenden Griffabschnitt des Handgriffs seitlich und unterhalb umgibt. Der Griffabschnitt kann bündig mit einer oberen Kante des Gehäuses des Energiemoduls abschließen oder insbesondere eine obere seitliche Kante des Gehäuses bilden. Ein auf diese Weise in das Gehäuse integrierter Handgriff kann einfach ergriffen werden, wobei eine Beschädigung des Batteriemoduls durch einen Stoß auf den Handgriff im Betrieb des Flurförderzeugs vermieden wird.

In einer Ausgestaltung weist der Batterieaufnahmeraum einen Boden, eine Rückwand, zwei Seitenwände und eine obere Wand auf, wobei das Energiemodul in der definierten Einbaulage auf dem Boden steht und eine gekrümmte obere Kontur aufweist, die sich in Kontakt mit der oberen Wand befindet. Die gekrümmte obere Kontur kann insbesondere von einer oberen Kante der Seitenwände gebildet sein. Die Rückwand und die beiden Seitenwände sowie die obere Wand können in der definierten Einbaulage unmittelbar an das Energiemodul angrenzen, sodass ein Verschieben des Energiemoduls in die entsprechenden Richtungen unmöglich ist. Die gekrümmte obere Kontur des Energiemoduls kann einen Krümmungsradius aufweisen, der im Wesentlichen dem Abstand der Kontur zu der Schwenkachse entspricht. Dadurch kann die gekrümmte obere Kontur an der oberen Wand oder einer Teilfläche oder Kante der oberen Wand entlang gleiten, wenn das Energiemodul verkippt wird. Gleichzeitig wird das Energiemodul in seiner definierten Anbaulage durch die obere Wand an einem Verschieben nach oben gehindert. Die obere Wand kann sich in Richtung der beim Verkippen ausgeführten Bewegung des oberen Endes des Energiemoduls nur über einen Abschnitt des Energiemoduls erstrecken. Die obere Wand kann beispielsweise streifenförmig und als ebene Fläche ausgeführt sein.

In einer Ausgestaltung weist der Batterieaufnahmeraum einen Anschlag auf, der mit einem Gegenstück am Energiemodul zusammenwirkt und eine Begrenzung der Verkippbewegung beim Erreichen des vorgegebenen Winkels bewirkt. Durch den Anschlag wird das Entnehmen des Energiemoduls weiter vereinfacht, weil unmittelbar spürbar wird, wann die Verkippbewegung abgeschlossen ist. Außerdem kann der Anschlag auch das Einsetzen des Energiemoduls vereinfachen, weil das Energiemodul einfach in die oben erläuterte Zwischenposition, in der es an dem Anschlag anliegt, gebracht werden kann. Dabei kann der Anschlag beispielsweise als Führung für das Einschieben des Energiemoduls in die Zwischenposition dienen. Der Anschlag kann beispielsweise von einer Vorderwand des Batterieaufnahmeraums gebildet sein, die auf der der Rückwand gegenüberliegenden Seite des Energiemoduls angeordnet ist. Die Vorderwand kann um den vorgegebenen Winkel gegenüber der Rückwand geneigt angeordnet sein. Die Vorderwand kann sich nur über einen Teil der Höhe des Aufnahmeraums erstrecken. Die Vorderwand kann beispielsweise von einem ebenen Streifen gebildet sein, der an den Boden des Batterieaufnahmeraums angrenzt.

In einer Ausgestaltung ist der Batterieaufnahmeraum in das Antriebsteil integriert. Dadurch wird eine die elektrische Verbindung zwischen dem Energiemodul und dem Fahrantrieb belastende Relativbewegung beim Ausüben der Hubfunktion vermieden. Außerdem muss das Energiemodul nicht mit angehoben werden, was zu einer Senkung des Energieverbrauchs für die Hubfunktion führt. Außerdem kann der Batterieaufnahmeraum bei Integration in das Antriebsteil für einen Benutzer, der sich in der Regel auf der Seite des Antriebsteils befindet, besonders einfach zugänglich sein. Zudem ist der Batterieaufnahmeraum und das Energiemodul vor einer Beschädigung durch eine von dem Lasttragmittel aufgenommene Last geschützt.

In einer Ausgestaltung ist mindestens eine Seitenfläche des Energiemoduls und/oder eine obere Fläche des Energiemoduls in der definierten Einbaulage von außen sichtbar und schließt im Wesentlichen bündig mit einer angrenzenden äußeren Fläche eines Gehäuses des Flurförderzeugs ab. Bei dem Gehäuse des Flurförderzeugs kann es sich insbesondere um das Gehäuse des Antriebsteils handeln. Mit anderen Worten wird ein Flächenabschnitt einer äußeren Kontur des Flurförderzeugs vom Gehäuse des Energiemoduls gebildet. Dies kann zur Gewichtsreduktion des Flurförderzeugs beitragen und das Auswechseln des Energiemoduls weiter vereinfachen, weil vor dem Entnehmen des Energiemoduls kein Element des Gehäuses des Flurförderzeugs geöffnet, beispielsweise aufgeklappt, werden muss.

In einer Ausgestaltung weist das Flurförderzeug eine im Betrieb einer Bedienperson zugewandte Fläche auf, die an den Batterieaufnahmeraum angrenzt, und das Verkippen des Energiemoduls erfolgt in Richtung zu der Bedienperson hin. Diese Anordnung des Batterieaufnahmeraums ist ergonomisch besonders günstig. Ein Benutzer kann ausgehend von seiner gewohnten Bedienposition das Energiemodul einfach entnehmen, indem er das obere Ende des Energiemoduls, insbesondere unter Verwendung eines dort angebrachten Handgriffs, zu sich heranzieht. Mit anderen Worten erfolgt das Verkippen des oberen Endes des Energiemoduls aus der an den Batterieaufnahmeraum angrenzenden Fläche heraus.

In einer Ausgestaltung ist eine Verriegelungseinrichtung vorgesehen, die das Verkippen des Energiemoduls verhindert. Durch die Verriegelungseinrichtung ist das Energiemodul zusätzlich in seiner definierten Einbaulage gesichert. Beispielsweise kann die Verriegelungseinrichtung von einer Feder in einer verriegelten Stellung gehalten weden und ein Betätigungselement aufweisen, mit dem die Verriegelung gegen die Federkraft aufhebbar ist. Ein solches Verriegelungselement kann nach dem Einsetzen des Energiemoduls automatisch seine verriegelte Stellung einnehmen und beibehalten. Die Verriegelungseinrichtung kann ein Rastelement aufweisen, das in eine Öffnung des Batterieaufnahmeraums, insbesondere in eine Öffnung in der oberen Wand des Batterieaufnahmeraums, einrastet. Dies bewirkt eine einfache und zuverlässige automatische Verriegelung. In Verbindung mit dem Batterieaufnahmeraum, der die Position des Energiemoduls gegen eine Verschiebung insbesondere in der Hauptbelastungsrichtung bereits fixiert, braucht die Verriegelung nur noch die in der definierten Einbaulage allein mögliche Verkippbewegung zu verriegeln. Die Verriegelung kann daher für geringere Belastung dimensioniert werden.

In einer Ausgestaltung weist die Verriegelungseinrichtung ein Betätigungselement auf, das so angeordnet ist, dass es beim Ergreifen des Handgriffs mit der den Handgriff ergreifenden Hand betätigt werden kann. Dadurch kann insbesondere das Entriegeln mit derselben Hand erfolgen, mit der das Energiemodul entnommen werden soll. Das Entnehmen des Batteriemoduls wird dadurch weiter vereinfacht und kann insbesondere mit einer einzigen, harmonischen Handbewegung erledigt werden. Das Betätigungselement kann beispielsweise ein Druckknopf sein, der so angeordnet ist, dass er mit einem Finger der den Handgriff umschließenden Hand, insbesondere mit dem Mittelfinger, gedrückt werden kann. Alternativ können das Betätigungselement und der Handgriff einteilig ausgebildet sein. Beispielsweise kann der Handgriff drehbar ausgeführt sein, wobei durch Verdrehen des Handgriffs die Verriegelungseinrichtung betätigt bzw. entriegelt wird. Alternativ kann der Handgriff zur Betätigung der Verriegelungseinrichtung verschieblich in dem Energiemodul geführt sein, sodass er zum Entriegeln beispielsweise heruntergedrückt werden kann.

In einer Ausgestaltung sind am Energiemodul oder im Batterieaufnahmeraum federnd vorgespannte Kontakte angeordnet, die beim Einsetzen des Energiemoduls automatisch eine elektrische Verbindung zwischen dem Energiemodul und dem Flurförderzeug herstellen. Grundsätzlich kann die elektrische Verbindung auch manuell hergestellt werden, beispielsweise durch eine Steckverbindung. Es kann auch eine Steckverbindung verwendet werden, die die federnd vorgespannten Kontakte aufweist. Eine besonders zuverlässige Kontaktierung wird mit Kontakten erreicht, die Kontaktkörper aufweisen, die in einem Grundkörper in ihrer Längsrichtung beweglich geführt sind und jeweils von einer Feder mit einer Kraft in der Längsrichtung beaufschlagt sind. Die Kontaktkörper sind so angeordnet, dass sie in der definierten Einbaulage mit einer ausreichenden Kraft gegen korrespondierende Kontaktflächen am Energiemodul bzw. im Batterieaufnahmeraum gepresst werden. Beispielsweise können die Kontakte am Boden des Batterieaufnahmeraums angeordnet sein und mit dem Fahrantrieb, insbesondere einer Motorsteuerung, verbunden sein. In diesem Fall können an der Unterseite des Energiemoduls korrespondierende Kontakte angeordnet sein, die in der definierten Einbaulage die Kontaktkörper kontaktieren. Die Kontakte können so angeordnet sein, dass die für das Öffnen und Schließen der Kontakte auszuführende Bewegung entlang der oben erläuterten Hauptbelastungsrichtung verläuft, insbesondere in einer im Wesentlichen vertikalen Richtung. Ein unbeabsichtigtes Öffnen der Kontakte wird dann durch die Fixierung der Einbaulage durch den Batterieaufnahmeraum zuverlässig verhindert.

In einer Ausgestaltung weist das Energiemodul ein Batteriemanagementsystem auf und zur Herstellung einer elektrischen Verbindung zum Datenaustausch zwischen diesem Batteriemanagementsystem und dem Flurförderzeug sind am Energiemodul oder im Batterieaufnahmeraum weitere federnd vorgespannte Kontakte angeordnet, die beim Einsetzen des Energiemoduls automatisch eine elektrische Verbindung zwischen dem Energiemodul und dem Flurförderzeug herstellen. Das Batteriemanagementsystem dient zur Überwachung der Batterie, insbesondere des Ladezustands der Batterie. Zusätzlich zum Datenaustausch mit dem Flurförderzeug ist ein Datenaustausch mit einem Ladegerät oder einer Ladestation möglich. Das Batteriemanagementsystem mit der automatischen Kontaktierung stellt eine einfache Möglichkeit zur Überwachung der Batterie dar.

In einer Ausgestaltung ist eine Ladestation vorhanden, die einen Batterieaufnahmeraum aufweist, der dem Batterieaufnahmeraum des Flurförderzeugs gleicht. Dadurch kann das Energiemodul auch in die Ladestation besonders einfach eingesetzt bzw. derselben entnommen werden. Dabei kann auch für eine automatische Kontaktierung wie im Batterieaufnahmeraum des Flurförderzeugs gesorgt sein. Es wird dann auch der Aufladevorgang vereinfacht.

Die Erfindung wird nachfolgend anhand von in Figuren dargestellten Ausführungsbeispielen näher erläutert. Es zeigen:
- Fig. 1: ein erfindungsgemäßes Flurförderzeug in einer Ansicht von der Seite,
- Fig. 2: das Flurförderzeug aus Figur 1 in einer Ansicht von oben,
- Fig. 3: eine vereinfachte Ansicht auf das Flurförderzeug aus Figur 1 auf die dem Benutzer zugewandte Seite des Antriebsteils,
- Fig. 4: den Batterieaufnahmeraum und ein Energiemodul in der in der Figur 3 mit L-M bezeichneten Ansicht in vier unterschiedlichen Zuständen a) bis d),
- Fig. 5: einen Querschnitt durch das Energiemodul und Teile des Batterieaufnahme-raums in einer vertikalen Schnittebene,
- Fig. 6: die Verriegelungseinrichtung des Energiemoduls aus Figur 5 in einer Quer-schnittsdarstellung,
- Fig. 7: eine stark vereinfachte, schematische Ansicht einer Ladestation für ein Ener-giemodul,
- Fig. 8: ein weiteres Ausführungsbeispiel eines Energiemoduls in einer vereinfachten Ansicht von der Seite,
- Fig. 9: eine Detaildarstellung der Verriegelungseinrichtung des Energiemoduls aus Figur 8 in der in Figur 8 mit N-O bezeichneten Blickrichtung.

In allen Figuren werden für sich entsprechende Teile die gleichen Bezugszeichen verwendet.

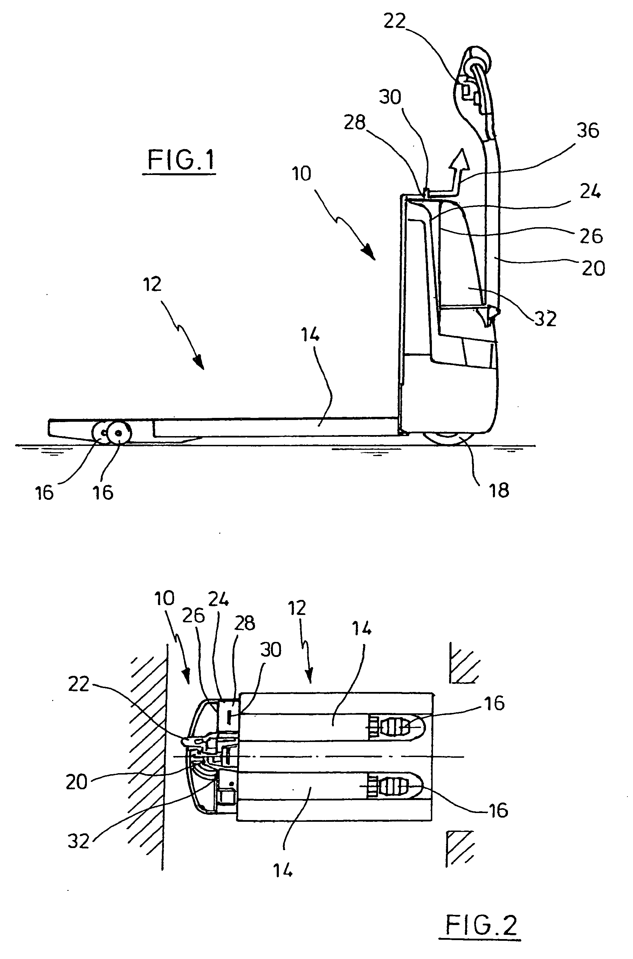

Figur 1 zeigt ein deichselgeführtes Niederhubflurförderzeug. Es weist ein Antriebsteil 10 und ein Lastteil 12 auf. Das Lastteil 12 weist zwei Gabelarme 14 auf, an deren vorderen Enden nach unten ausschwenkbare Lasträder 16 angeordnet sind. Die Gabelarme 14 sind gegenüber dem Antriebsteil 10 anhebbar und bilden ein Lasttragmittel.

Das Antriebsteil 10 hat ein lenkbares Antriebsrad 18, das mit einer Deichsel 20 gesteuert wird. Am Deichselkopf 22 ist eine Multifunktionsbedieneinheit mit Bedienelementen für den Fahr- und Hubantrieb angeordnet. Das Antriebsteil 10 umfasst weiterhin einen Elektromotor und ein Getriebe für den Fahrantrieb, einen Hubantrieb sowie entsprechende Steuereinrichtungen. Diese Elemente sind in den Figuren nicht dargestellt.

Das Antriebsteil 10 weist eine besonders kurze Bauform auf, wobei die Länge des Antriebsteils 10 (ohne Deichsel 20) in Fahrtrichtung weniger als halb so groß ist wie die Breite des Antriebsteils 10 quer zur Fahrtrichtung. Diese kurze Bauform wird erreicht durch die Verwendung eines Energiemoduls 24 mit einer Batterie hoher Energiedichte, insbesondere in Lithium-Ionen-Technologie, das in das Antriebsteil 10 integriert ist. Es befindet sich in einem oberen Bereich des Antriebsteils 10 und ist im in den Figuren 1 bis 3 gezeigten, vollständig in einen Batterieaufnahmeraum eingesetzten Zustand, von außen sichtbar. Eine dem Benutzer, der sich am deichselseitigen Ende des Antriebsteils 10 befindet, zugewandte vordere Seitenwand 26 des Energiemoduls 24 sowie eine obere Fläche 28 des Energiemoduls sind von außen sichtbar und schließen annähernd bündig mit angrenzenden äußeren Flächen eines Gehäuses des Antriebsteils 10 ab.

Am oberen Ende des Energiemoduls 24 ist ein bügelförmiger Handgriff 30 ausgebildet, der in der gezeigten Einbaulage des Energiemoduls 24 einfach von außen ergriffen werden kann.

In der Ansicht der Figur 2 von oben sind die bereits erläuterten Komponenten nochmals dargestellt. Gut erkennbar ist die kurze Bauform des Antriebsteils 10 und die seitliche Anordnung des Energiemoduls 24. Das Energiemodul 24 befindet sich seitlich von einer mittigen, der Deichsel zugewandten Ausbuchtung 32 des Gehäuses des Antriebsteils 10.

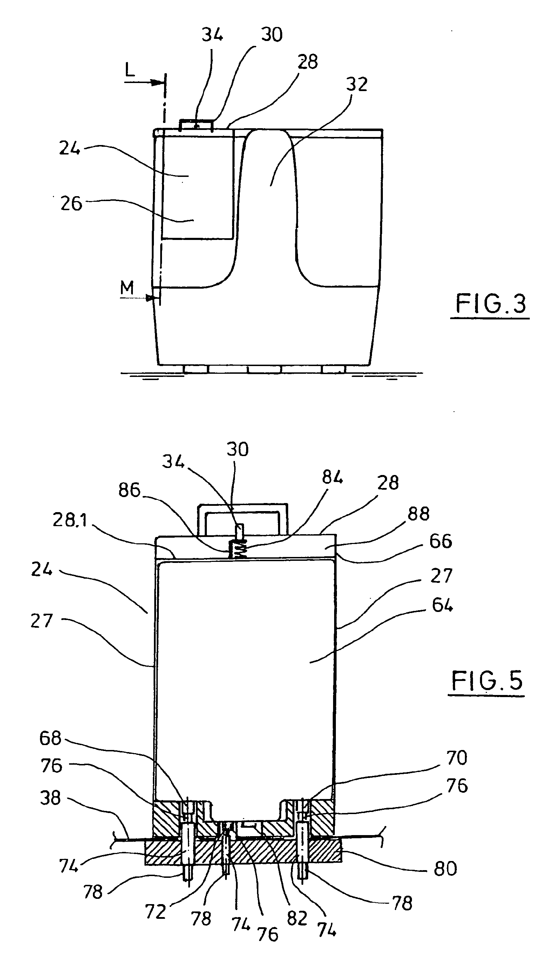

Dies ist auch in der vereinfachten Darstelldung der Figur 3 deutlich zu erkennen. Ebenfalls erkennbar ist ein Betätigungselement 34 in Form eines Druckknopfs für eine Verriegelungseinrichtung des Energiemoduls 24. Das Betätigungselement 34 ist bezogen auf die Längsrichtung des Handgriffs 30 in dessen Mitte angeordnet, sodass es beim Ergreifen des Handgriffs 30 einfach beispielsweise mit einem Finger der den Handgriff 30 ergreifenden Hand betätigt werden kann.

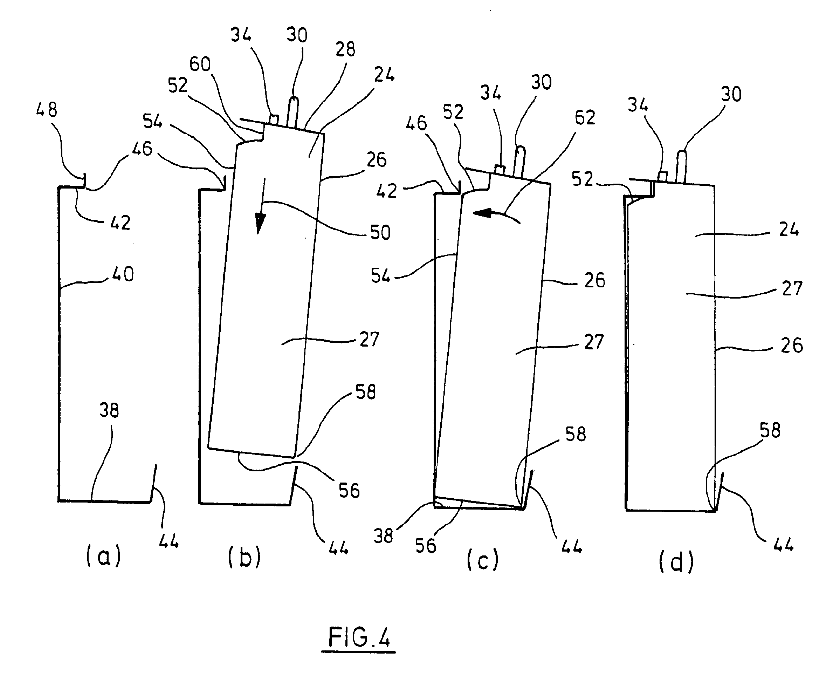

Der zum Entnehmen des Energiemoduls 24 aus dem Batterieaufnahmeraum des Flurförderzeugs auszuführende Bewegungsablauf ist in der Figur 1 durch den Pfeil 36 veranschaulicht. Im Einzelnen wird dieser Ablauf und das Zusammenwirken mit dem Batterieaufnahmeraum anhand der Figur 4 erläutert. Teil a) dieser Figur zeigt den Batterieaufnahmeraum in einer querschnittsartigen Darstellung in der in der Figur 3 mit L-M bezeichneten Blickrichtung. Der Batterieaufnahmeraum weist einen waagerecht angeordneten Boden 38, eine senkrecht angeordnete Rückwand 40, eine obere Wand 42 und eine vordere Wand 44 auf. Die obere Wand 42 ist waagerecht angeordnet und erstreckt sich nur über einen Teil der in der Figur 4 sichtbaren Breite des Bodens 38 des Batterieaufnahmeraums. Die obere Wand 42 schließt sich an die Rückwand 40 an. Sie wird von einem ebenen Streifen gebildet. Am von der Rückwand 40 entfernten Ende der oberen Wand 42 befindet sich eine waagerecht angeordnete Vorderkante 46 der oberen Wand, an die sich nach oben ein senkrecht angeordneter, abgewinkelter Abschnitt 48 anschließt. Am von der Rückwand 40 entfernten Ende des Bodens 38 befindet sich die vordere Wand 44, die in einem vorgegebenen Winkel gegenüber der Rückwand 40 geneigt ist, sodass sich die in der Figur sichtbare Breite des Batterieaufnahmeraums beginnend vom Boden 38 nach oben vergrößert.

Im Teil b) der Figur 4 ist zusätzlich zu den bereits erläuterten Teilen des Batterieaufnahmeraums ein Energiemodul 24 eingezeichnet, das in den Batterieaufnahmeraum eingesetzt werden soll. Es wurde beispielsweise in einer seitlichen Bewegung, in der Figur 4 b) von rechts kommend, in die eingezeichnete Stellung gebracht. Das Energiemodul 24 weist eine vordere Seitenfläche 26, eine obere Deckelfläche 28, einen Handgriff 30 und ein Betätigungselement 34 auf. Handgriff 30 und Betätigungselement 34 stehen von der oberen Deckelfläche 28 nach oben vor. Weiterhin haben die Seitenflächen 27 des Energiemoduls 24 eine gekrümmte obere Kontur 52. Zwischen den beiden gekrümmten Konturen 52 erstreckt sich eine untere Deckelfläche 28.1 (siehe Fig. 5). Diese ist in der Fig. 4 nicht sichtbar, weil sie hinter der Kontur 52 verschwindet. Eine hintere Seitenfläche 54 verläuft parallel zur vorderen Seitenfläche 26 und nach unten hin wie diese bis zu einer Bodenfläche 56. Der Krümmungsradius der gekrümmten oberen Kontur 52 der Seitenflächen 27 entspricht ungefähr dem Abstand dieser Kontur 52 von der unteren, vorderen Kante 58 des Energiemoduls 24. An der unteren vorderen Kante 58 grenzen die vordere Seitenfläche 26 und die Bodenfläche 56 des Energiemoduls aneinander an. Weiterhin haben die Seitenflächen 27 des Energiemoduls 24 einen parallel zur hinteren Seitenfläche 54 angeordneten und gegenüber dieser nach innen zurückversetzten vertikalen Abschnitt 60 am oberen Ende, dessen Abmessungen dem abgewinkelten Abschnitt 48 des Batterieaufnahmeraums entsprechen. In der in der Figur 4 b) gezeigten Stellung des Energiemoduls befindet sich die untere vordere Kante 58 nahe einer oberen Kante der vorderen Wand 44, sodass die untere vordere Kante 58 beim weiteren Einsetzen des Energiemoduls 24 in den Batterieaufnahmeraum entlang der Richtung des Pfeils 50 an der Innenseite der vorderen Wand 44 entlang gleiten kann.

Dadurch gelangt das Energiemodul 24 in die im Teil c) der Figur 4 gezeigte, definierte Zwischenposition, in der die untere vordere Kante 58 auf dem Boden 38 des Batterieaufnahmeraums aufliegt, und zwar nahe der an den Boden 38 angrenzenden vorderen Wand 44 bzw. auch an dieser anliegend. Gleichzeitig befindet sich die zwischen der gekrümmten Kontur 52 und der hinteren Seitenwand 54 des Energiemoduls 24 gebildete Kante an der Vorderkante 46 der oberen Wand 42 des Batterieaufnahmeraums. Ausgehend von dieser Zwischenposition wird das Energiemodul 24 um die von der unteren vorderen Kante 58 gebildete Schwenkachse herum verkippt, wie durch den Pfeil 62 veranschaulicht. Dabei gelangt die gekrümmte obere Kontur 52 unter die obere Wand 42 des Batterieaufnahmeraums. Die Vorderkante 46 der oberen Wand kann dabei an der gekrümmten Kontur 52 entlang gleiten. In der in Teil d) der Figur 4 gezeigten Endstellung, die der definierten Einbaulage entspricht, liegt die Vorderkante 46 der vorderen Wand 42 des Batterieaufnahmeraums an der gekrümmten Kontur 52 an und verhindert ein Verrutschen des Energiemoduls 24 nach oben. Der abgewinkelte Abschnitt 48 kann in dieser Stellung an dem vertikalen Abschnitt 60 des Energiemoduls 24 anliegen. Die Bodenfläche 56 steht in der definierten Einbaulage bevorzugt flächig auf dem Boden 38 des Batterieaufnahmeraums. Die hintere Seitenfläche 54 des Energiemoduls 24 grenzt an die Rückwand 40 des Batterieaufnahmeraums an. Die untere vordere Kante 58 des Energiemoduls 24 liegt ebenfalls an einer Fläche des Batterieaufnahmeraums an, nämlich am unteren Abschnitt der vorderen Wand 44. Aus der in Figur 4 d) gezeigten definierten Einbaulage kann das Energiemodul 24 erst nach einem Verkippen des oberen Endes des Energiemoduls 24 um einen vorgegebenen Winkel um die von der unteren vorderen Kante 58 definierte Schwenkachse herum aus dem Batterieaufnahmeraum entnommen werden.

Figur 5 zeigt das Energiemodul 24 in einer Querschnittsdarstellung inklusive der fahrzeugseitigen Kontaktierung. Es enthält im Inneren seines Gehäuses 66 eine Batterie 64 mit mehreren, nicht dargestellten Lithium-Ionen-Zellen und zwei Kontakten 68, 70. Die Batterie 64 enthält zudem ein ebenfalls nicht dargestelltes Batteriemanagementsystem zur Überwachung des Ladezustands der Batterie 64 und zum Datenaustausch zwischen Batterie 64 und Fahrzeugsteuerung bzw. Ladegerät. Hierzu weist die Batterie 64 weitere Kontakte 72 auf, von denen in der Figur einer gezeigt ist. Jeder der Kontakte 68, 70, 72 wirkt mit einem federnd vorgespannten Kontakt zusammen, der beim Einsetzen des Energiemoduls 24 in den Batterieaufnahmeraum in der in der Figur 5 gezeigten definierten Einbaulage automatisch eine elektrische Verbindung herstellt. Hierzu weisen die federnd vorgespannten Kontakte jeweils einen Grundkörper 74 und einen darin längs verschieblich gelagerten Kontaktkörper 76 auf. Die Kontaktkörper 76 werden jeweils von einer nicht dargestellten Feder, die innerhalb des Grundkörpers 74 angeordnet ist, mit einer Federkraft in Richtung zu den Kontakten 68, 70, 72 an der Batterie 64 beaufschlagt. An den unteren Enden der Grundkörper 74 befindet sich jeweils ein Anschlussgewinde 78 zur Verbindung mit der elektrischen Anlage des Fahrzeugs. Die Grundkörper 74 der Kontakte sind jeweils fest in eine isolierende Grundplatte 80 eingebettet. Der Boden 38 des Batterieaufnahmeraums weist Öffnungen auf, durch die die Grundkörper 74 der Kontakte hindurchragen, wobei zwischen den Öffnungsrändern und den Grundkörpern 74 ein ausreichender Abstand verbleibt, um einen elektrischen Kontakt auszuschließen. Schließlich weist die Batterie 64 eine mehrpolige Steckverbindung 82 auf, die zum Anschluss eines Diagnosegeräts gedacht ist.

Figur 5 zeigt außerdem im oberen Bereich die Verriegelungseinrichtung 86 mit dem bereits erläuterten Betätigungselement 34. Dieses wird von einer Feder 84 mit einer Kraft entgegen seiner Betätigungsrichtung, d.h. nach oben, vorgespannt. Die Verriegelungseinrichtung 86 befindet sich in einem Hohlraum 88, der innerhalb des Gehäuses 66 des Energiemoduls 24 oberhalb der Batterie 64 zwischen der unteren Deckelfläche 28.1 und der oberen Deckelfläche 28 ausgebildet ist.

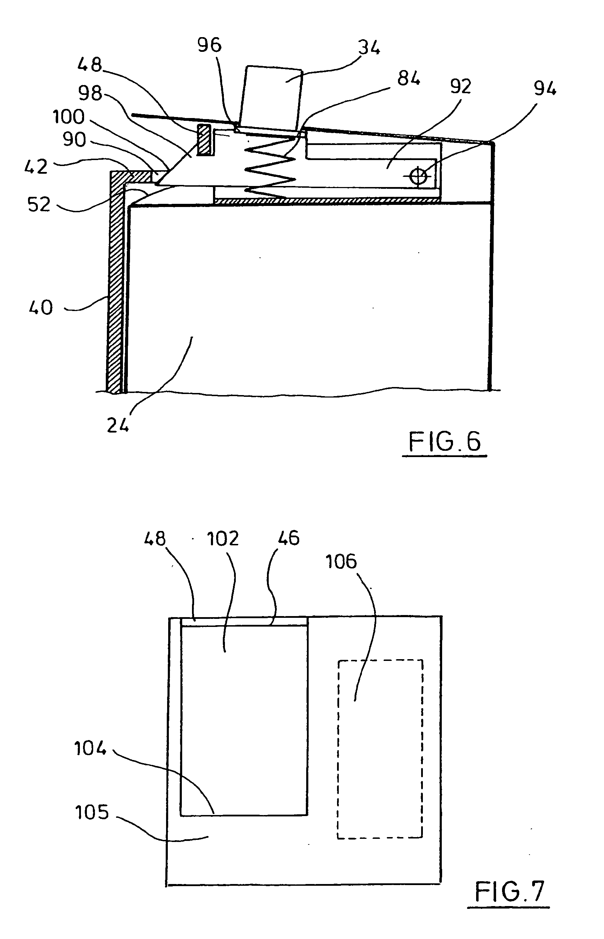

Figur 6 zeigt weitere Einzelheiten der Verriegelungseinrichtung 86. Erkennbar sind die bereits beschriebene Feder 84 und das Betätigungselement 34. Dargestellt ist das Energiemodul 24 in seiner definierten Einbaulage, wobei vom Batterieaufnahmeraum Teile der Rückwand 40, Teile der oberen Wand 42 und der abgewinkelte Abschnitt 48 erkennbar sind. Die obere Wand 42 weist eine Öffnung 90 auf. Die Verriegelungseinrichtung 86 umfasst einen Haken 92, der um einen Lagerpunkt 94 um eine waagerecht angeordnete Achse schwenkbar gelagert ist. Die Feder 84 liegt mit ihrem oberen Ende an einem annähernd waagerecht angeordneten Abschnitt 96 des Hakens an und drückt den Haken 92 mit dem an dem Abschnitt 96 befestigten Betätigungselement 34 nach oben. Der Haken 92 weist an seinem in der Figur links gezeigten, vom Lagerpunkt 94 entfernten Ende einen Rastabschnitt 98 auf mit einer gegenüber der Bewegungsrichtung des oberen Endes des Energiemoduls 24 beim Verkippen geneigten Stirnfläche 100. Der Rastabschnitt 98 hintergreift in der gezeigten, definierten Einbaulage den abgewinkelten Abschnitt 48 des Batterieaufnahmeraums. Diese Verriegelung kann durch Betätigen des Betätigungselements 34 durch Drücken nach unten und dadurch bewirktes Verschwenken des Hakens 92 um den Lagerpunkt 94 nach unten einfach aufgehoben werden. Dann kann das obere Ende des Energiemoduls 24 in der Figur nach rechts verkippt werden. Der Handgriff 30 des Energiemoduls 24 ist in der Figur 6 nicht dargestellt.

Figur 7 zeigt schematisch und stark vereinfacht eine Ladestation mit einem entsprechend dem Batterieaufnahmeraum des erläuterten Flurförderzeugs ausgebildeten Batterieaufnahmeraum, in den das Energiemodul 24 zum Aufladen eingesetzt werden kann. Hierzu wird das Energiemodul 24 in eine Öffnung 102 des Batterieaufnahmeraums eingesetzt. Die Öffnung 102 wird nach unten begrenzt von einer oberen Kante 104 einer vorderen Wand 105 und nach oben von der Vorderkante 46 einer oberen Wand 42, an die sich nach oben ein abgewinkelter Abschnitt 48 anschließt. Neben der Öffnung 102 gestrichelt angedeutet ist ein Ladegerät 106 der Ladestation.

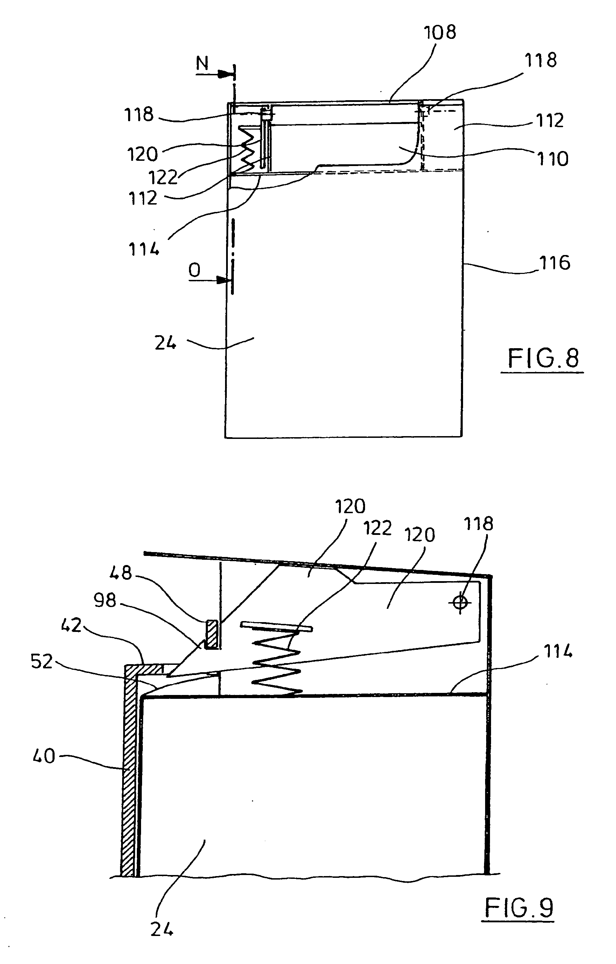

Die Figuren 8 und 9 zeigen ein anderes Ausführungsbeispiel eines Energiemoduls 24, bei dem ein Handgriff 108 in eine Kontur des Gehäuses 116 integriert ist, sodass er nicht nach außen übersteht. Unterhalb des Handgriffs befindet sich eine Griffmulde 110, sodass der Handgriff 108 einfach mit einer Hand umschlossen werden kann. Die Griffmulde 110 wird begrenzt durch seitliche Trennwände 112 und eine untere Trennwand 114, die jeweils Teile des Gehäuses 116 des Energiemoduls 24 bilden. Die untere Trennwand 114 entspricht der unteren Deckelfläche 28.1 des Ausführungsbeispiels der Figur 5. Nach oben ist die Griffmulde 110 offen.

Der Handgriff 108 ist als Drehgriff ausgebildet und weist zu diesem Zweck zwei Zapfen 118 auf, die in Bohrungen in den seitlichen Trennwänden 112 gelagert sind. Der in der Figur 8 links befindliche Zapfen 118 ist drehfest verbunden mit einem Haken 120, der wiederum von einer Feder 122 nach oben gedrückt wird.

Die Wirkungsweise des Hakens ist in der Figur 9 nochmals in einer Blickrichtung, die in der Figur 8 mit N-O gekennzeichnet ist, dargestellt. Der Haken 120 weist einen Rastabschnitt 98 auf, der wie bereits in Verbindung mit dem Ausführungsbeispiel der Figur 6 erläutert mit den ebenfalls dort erläuterten Komponenten des Batterieaufnahmeraums zusammenwirkt. In der Figur 9 sind diesbezüglich die gleichen Bezugszeichen verwendet. Die Verriegelung wird durch Drehen des Drehgriffs 108 entgegen dem Uhrzeigersinn aufgehoben, sodass das Energiemodul 24 in einem einzigen, flüssigen Bewegungsablauf aus dem Batterieaufnahmeraum entnommen werden kann.

## Patentansprüche

1. Flurförderzeug mit einem Antriebsteil (10), das einen elektrischen Fahrantrieb aufweist, einem Lastteil (12), das ein Lasttragmittel aufweist und gegenüber dem Antriebsteil (10) anhebbar ist, einem Batterieaufnahmeraum und einem manuell handhabbaren, in den Batterieaufnahmeraum einsetzbaren Energiemodul (24), das eine Batterie (64) zur Versorgung des Fahrantriebs aufweist, wobei das Energiemodul (24) im in den Batterieaufnahmeraum eingesetzten Zustand eine definierte Einbaulage aufweist, **dadurch gekennzeichnet, dass** der Batterieaufnahmeraum das Energiemodul (24) im eingesetzten Zustand so umschließt, dass das Energiemodul (24) in der definierten Einbaulage nicht verschiebbar ist, sondern erst nach einem Verkippen aus dem Batterieaufnahmeraum entnehmbar ist, wobei beim Verkippen ein oberes Ende des Energiemoduls (24) um einen vorgegebenen Winkel um eine waagerechte Schwenkachse herum bewegt wird.

2. Flurförderzeug nach Anspruch 1, **dadurch gekennzeichnet, dass** das Energiemodul (24) an dem oberen Ende einen Handgriff (30, 108) aufweist.

3. Flurförderzeug nach Anspruch 1 oder 2, **dadurch gekennzeichnet, dass** das Energiemodul (24) ein Gehäuse (116) aufweist und der Handgriff (108) in eine Kontur des Gehäuses (116) integriert ist, so dass er nicht nach außen über das Gehäuse (116) übersteht.

4. Flurförderzeug nach einem der Ansprüche 1 bis 3, **dadurch gekennzeichnet, dass** der Batterieaufnahmeraum einen Boden (38), eine Rückwand (40), zwei Seitenwände und eine obere Wand (42) aufweist, wobei das Energiemodul (24) in der definierten Einbaulage auf dem Boden (38) steht und eine gekrümmte obere Kontur (52) aufweist, die sich in Kontakt mit der oberen Wand (42) befindet.

5. Flurförderzeug nach einem der Ansprüche 1 bis 4, **dadurch gekennzeichnet, dass** der Batterieaufnahmeraum einen Anschlag aufweist, der mit einem Gegenstück am Energiemodul (24) zusammenwirkt und eine Begrenzung der Verkippbewegung beim Erreichen des vorgegebenen Winkels bewirkt.

6. Flurförderzeug nach einem der Ansprüche 1 bis 5, **dadurch gekennzeichnet, dass** der Batterieaufnahmeraum in das Antriebsteil (10) integriert ist.

7. Flurförderzeug nach einem der Ansprüche 1 bis 6, **dadurch gekennzeichnet, dass** mindestens eine Seitenfläche (26) des Energiemoduls und/oder eine obere Fläche (28) des Energiemoduls (24) in der definierten Einbaulage von außen sichtbar ist und im Wesentlichen bündig mit einer angrenzenden äußeren Fläche eines Gehäuses des Flurförderzeugs abschließt.

8. Flurförderzeug nach einem der Ansprüche 1 bis 7, **dadurch gekennzeichnet, dass** das Flurförderzeug eine im Betrieb einer Bedienperson zugewandte Fläche aufweist, die an den Batterieaufnahmeraum angrenzt, und das Verkippen des Energiemoduls (24) in Richtung zu der Bedienperson hin erfolgt.

9. Flurförderceug nach einem der Ansprüche 1 bis 8, **dadurch gekennzeichnet, dass** eine Verriegelungseinrichtung (86) vorgesehen ist, die das Verkippen des Energiemoduls (24) verhindert.

10. Flurförderzeug nach Anspruch 9, **dadurch gekennzeichnet, dass** die Verriegelungseinrichtung (86) ein Betätigungselement (34) aufweist, das so angeordnet ist, dass es beim Ergreifen des Handgriffs (30) mit der den Handgriff (30) ergreifenden Hand betätigt werden kann.

11. Flurförderzeug nach einem der Ansprüche 1 bis 10, **dadurch gekennzeichnet, dass** am Energiemodul (24) oder im Batterieaufnahmeraum federnd vorgespannte Kontakte angeordnet sind, die beim Einsetzen des Energiemoduls (24) automatisch eine elektrische Verbindung zwischen dem Energiemodul (24) und dem Flurförderzeug herstellen.

12. Flurförderzeug nach einem der Ansprüche 1 bis 11, **dadurch gekennzeichnet, dass** das Energiemodul (24) ein Batteriemanagementsystem aufweist und zur Herstellung einer elektrischen Verbindung zum Datenaustausch zwischen dem Batteriemanagementsystem und dem Flurförderzeug am Energiemodul (24) oder im Batterieaufnahmeraum weitere federnd vorgespannte Kontakte angeordnet sind, die beim Einsetzen des Energiemoduls (24) automatisch eine elektrische Verbindung zwischen dem Energiemodul (24) und dem Flurförderzeug herstellen.

13. Flurförderzeug nach einem der Ansprüche 1 bis 12, **dadurch gekennzeichnet, dass** eine Ladestation vorhanden ist, die einen Batterieaufnahmeraum aufweist, der dem Batterieaufnahmeraum des Flurförderzeugs gleicht.

## Claims

1. Industrial truck with a drive part (10) which comprises an electrical travel drive, a load part (12) which comprises a load carrying means and which may be lifted relative to the drive part (10), a battery receiving space and an energy module (24) which may be handled manually, which may be inserted into the battery receiving space and which comprises a battery (64) for supplying power to the travel drive, the energy module (24) having a defined installed position in the state inserted into the battery receiving space, **characterised in that** the battery receiving space encloses the energy module (24) in the inserted state so that the energy module (24) is not displaceable in the defined installed position but may only be removed from the battery receiving space after being tilted, during the tilting process an upper end of the energy module (24) being moved by a predetermined angle about a horizontal pivot axis.

2. Industrial truck according to Claim 1, **characterised in that** the energy module (24) has a handle (30, 108) at the upper end.

3. Industrial truck according to Claim 1 or 2, **characterised in that** the energy module (24) has a housing (116) and the handle (108) is integrated in a contour of the housing (116) so that it does not protrude outwards over the housing (116).

4. Industrial truck according to one of Claims 1 to 3, **characterised in that** the battery receiving space has a base (38), a rear wall (40), two side walls and an upper wall (42), the energy module (24) in the defined installed position standing on the base (38) and having a curved upper contour (52) which is in contact with the upper wall (42).

5. Industrial truck according to one of Claims 1 to 4, **characterised in that** the battery receiving space has a stop which cooperates with a mating piece on the energy module (24) and limits the tilting movement when the predetermined angle is reached.

6. Industrial truck according to one of Claims 1 to 5, **characterised in that** the battery receiving space is integrated in the drive part (10).

7. Industrial truck according to one of Claims 1 to 6, **characterised in that** at least one side surface (26) of the energy module and/or an upper surface (28) of the energy module (24) in the defined installed position is visible from outside and terminates substantially flush with an adjacent outer surface of a housing of the industrial truck.

8. Industrial truck according to one of Claims 1 to 7, **characterised in that** during operation the industrial truck has a surface facing an operator, which is adjacent to the battery receiving space, and the energy module (24) is tilted in the direction of the operator.

9. Industrial truck according to one of Claims 1 to 8, **characterised in that** a locking device (86) is provided which prevents the tilting of the energy module (24).

10. Industrial truck according to Claim 9, **characterised in that** the locking device (86) has an actuation element (34) which is arranged so that it may be actuated by the hand gripping the handle (30) when the handle (30) is gripped.

11. Industrial truck according to one of Claims 1 to 10, **characterised in that** resiliently pretensioned contacts are arranged on the energy module (24) or in the battery receiving space and which, when inserting the energy module (24), automatically produce an electrical connection between the energy module (24) and the industrial truck.

12. Industrial truck according to one of Claims 1 to 11, **characterised in that** the energy module (24) has a battery management system and for producing an electrical connection for data exchange between the battery management system and the industrial truck further resiliently pretensioned contacts are arranged on the energy module (24) or in the battery receiving space which, when inserting the energy module (24), automatically produce an electrical connection between the energy module (24) and the industrial truck.

13. Industrial truck according to one of Claims 1 to 12, **characterised in that** a charging station is present which has a battery receiving space which is the same as the battery receiving space of the industrial truck.

## Revendications

1. Chariot de manutention avec une partie d'entraînement (10) qui présente un entraînement de déplacement électrique, une partie de charge (12) qui présente un moyen de support de charge et peut être soulevée par rapport à la partie d'entraînement (10), un espace de réception de batterie et un module d'énergie (24) qui est maniable manuellement et peut être introduit dans l'espace de réception de batterie et qui présente une batterie (64) pour l'alimentation de l'entraînement de déplacement, le module d'énergie (24) présentant, dans l'état introduit dans l'espace de réception de batterie, une position de montage définie, **caractérisé en ce que** l'espace de réception de batterie entoure le module d'énergie (24) dans l'état introduit de sorte que le module d'énergie (24) n'est pas déplaçable quand il est dans l'état de montage défini, mais ne peut être enlevé qu'après un basculement hors de l'espace de réception de batterie, une extrémité supérieure du module d'énergie (24) étant, lors du basculement, déplacée d'un angle prédéfini autour d'un axe de pivotement horizontal.

2. Chariot de manutention selon la revendication 1, **caractérisé en ce que** le module d'énergie (24) présente à l'extrémité supérieure une poignée (30, 108).

3. Chariot de manutention selon la revendication 1 ou 2, **caractérisé en ce que** le module d'énergie (24) présente un boîtier (116) et **en ce que** la poignée (108) est intégrée dans un contour du boîtier (116) de sorte qu'elle ne dépasse pas du boîtier (116) vers l'extérieur.

4. Chariot de manutention selon une des revendications 1 à 3, **caractérisé en ce que** l'espace de réception de batterie présente un fond (38), une paroi arrière (40), deux parois latérales et une paroi supérieure (42), le module d'énergie (24) étant placé, dans la position de montage définie, sur le fond (38) et présentant un contour supérieur (52) courbe qui est en contact avec la paroi supérieure (42).

5. Chariot de manutention selon une des revendications 1 à 4, **caractérisé en ce que** l'espace de réception de batterie présente une butée qui coopère avec une pièce opposée sur le module d'énergie (24) et réalise une limitation du mouvement de basculement lorsque l'angle prédéfini est atteint.

6. Chariot de manutention selon une des revendications 1 à 5, **caractérisé en ce que** l'espace de réception de batterie est intégré dans la partie d'entraînement (10).

7. Chariot de manutention selon une des revendications 1 à 6, **caractérisé en ce qu'**au moins une surface latérale (26) du module d'énergie et/ou une surface supérieure (28) du module d'énergie (24) est visible de l'extérieur dans la position de montage définie et se termine essentiellement en affleurement avec une surface extérieure adjacente d'un boîtier du chariot de manutention.

8. Chariot de manutention selon une des revendications 1 à 7, **caractérisé en ce que** le chariot de manutention présente une surface, tournée vers un opérateur pendant le fonctionnement, qui est adjacente à l'espace de réception de batterie, et **en ce que** le basculement du module d'énergie (24) s'effectue en direction de l'opérateur.

9. Chariot de manutention selon une des revendications 1 à 8, **caractérisé en ce qu'**il est prévu un équipement de verrouillage (86) qui empêche le basculement du module d'énergie (24).

10. Chariot de manutention selon la revendication 9, **caractérisé en ce que** l'équipement de verrouillage (86) présente un élément d'actionnement (34) qui est disposé de sorte qu'il peut être actionné lors de la saisie de la poignée (30) avec la main saisissant la poignée (30).

11. Chariot de manutention selon une des revendications 1 à 10, **caractérisé en ce que**, sur le module d'énergie (24) ou dans l'espace de réception de batterie, ils sont déposés des contacts prétendus par ressort qui réalisent automatiquement, lors de l'introduction du module d'énergie (24), une liaison électrique entre le module d'énergie (24) et le chariot de manutention.

12. Chariot de manutention selon une des revendications 1 à 11, **caractérisé en ce que** le module d'énergie (24) présente un système de gestion de batterie et **en ce que**, pour la réalisation d'une liaison électrique en vue de l'échange de données entre le système de gestion de batterie et le chariot de manutention, d'autres contacts prétendus par ressort sont disposés sur le module d'énergie (24) ou dans l'espace de réception de batterie et établissement automatiquement une liaison électrique entre le module d'énergie (24) et le chariot de manutention lors de l'introduction du module d'énergie (24).

13. Chariot de manutention selon une des revendications 1 à 12, **caractérisé en ce qu'**il existe une station de charge qui présente un espace de réception de batterie qui ressemble à l'espace de réception de batterie du chariot de manutention.
